# EUROPEAN PATENT SPECIFICATION

(11) **EP 2 903 110 B1**
(45) Date of publication and mention of the grant of the patent: **16.11.2016**
(21) Application number: 14153173.1
(22) Date of filing: 30.01.2014
(51) Int. Cl.: H02G 3/12

(54) **Mounting box assembly**
Kastenmontageanordnung
Ensemble de montage de boîte

(43) Date of publication of application: 05.08.2015
(73) Proprietor: ABB Oy, 00380 Helsinki (FI)
(72) Inventor: Andersson, Johan, 06100 Porvoo (FI); Didriksson, Lars, 06100 Porvoo (FI); Tervo, Pekka, 06100 Porvoo (FI)
(74) Representative: Kolster Oy Ab

(56) References cited:
- US-A1- 2005 092 510
- US-A1- 2009 025 953
- US-B1- 7 367 121
- US-B1- 7 544 889

## Description

### FIELD OF THE INVENTION

The present invention relates to a mounting box assembly comprising a mounting box and an installation member adapted to be fixed to a frame of a wall.

A known mounting box assembly, shown in US-A-2005/0092510, comprises attaching means for attaching the installation member to the mounting box in a predetermined position in a depth direction.

One of the problems associated with the above known mounting box assembly is that each wallboard thickness requires different mounting box assembly. For example, there may be a specific installation member for each wallboard thickness.

### BRIEF DESCRIPTION OF THE INVENTION

An object of the present invention is to provide a mounting box assembly which can be used in connection with at least two different wallboard thicknesses. The objects of the invention are achieved by a mounting box assembly which is characterized by what is stated in the independent claim. The preferred embodiments of the invention are disclosed in the dependent claims.

The invention is based on the idea of providing a mounting box assembly with attaching means adapted to attach the installation member to the mounting box in at least two different predetermined positions in the depth direction.

An advantage of the mounting box assembly of the invention is that it can be used in connection with more than one wallboard thickness.

### BRIEF DESCRIPTION OF THE DRAWINGS

In the following the invention will be described in greater detail by means of preferred embodiments with reference to the attached drawings, in which
Figure 1 shows a mounting box assembly according to an embodiment of the invention;
Figure 2 shows a cross-sectional view of a detail of the mounting box assembly of Figure 1;
Figure 3 shows the mounting box assembly of Figure 1, a box case being depicted in a different position relative to an installation member;
Figure 4 shows a cross-sectional view of the mounting box assembly of Figure 3; and
Figure 5 shows the mounting box assembly of Figure 3 from below.

### DETAILED DESCRIPTION OF THE INVENTION

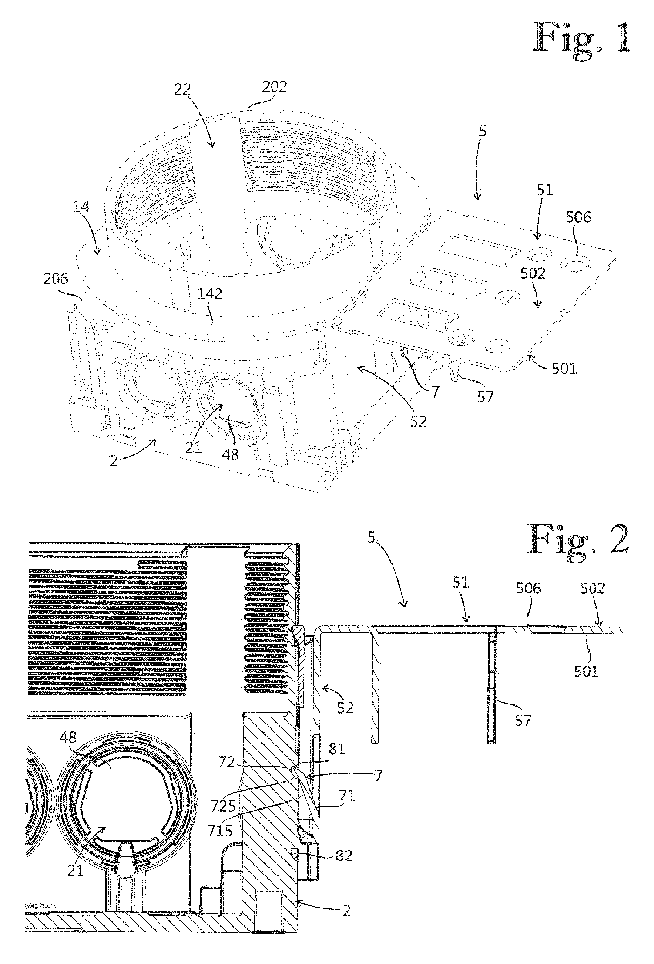

Figure 1 shows a mounting box assembly comprising a mounting box, an installation member 5, attaching means for attaching the installation member 5 to the mounting box, and an additional flange element 14. The mounting box comprises a box case 2 defining a mounting space for accommodating an electrical component such as a wall socket or a light switch. The box case 2 has a box opening 22 providing an access into the mounting space. An edge 202 of the box opening 22 defines a box opening plane. The mounting box has a depth direction which is perpendicular to the box opening plane. The installation member 5 is attached to the box case 2 from above. The box case 2 has a base portion whose cross section is substantially a square.

The installation member 5 is adapted to be attached to the box case 2 of the mounting box. The installation member 5 comprises a frame contact portion 51 by means of which the installation member 5 is adapted to be fixed to a frame of a wall. The frame contact portion 51 has a frame contact surface 501 adapted to be in contact with the frame of the wall. The frame contact surface 501 defines a frame contact plane which in a use situation extends substantially parallel to the box opening plane. The frame contact portion 51 also has a wallboard contact surface 502 adapted to be in contact with a wallboard of the wall. The wallboard contact surface 502 defines a wallboard contact plane which in a use situation extends substantially parallel to the box opening plane. The frame contact surface 501 faces opposite direction relative to the wallboard contact surface 502. Distance between the frame contact surface 501 and the wallboard contact surface 502 is equal to a thickness of the frame contact portion 51.

The frame contact portion 51 comprises a plurality of fixing member apertures 506. Each fixing member aperture 506 is a circular through hole adapted to receive a fixing member such as a screw or a nail for fixing the installation member 5 to a frame of a wall.

The frame contact portion 51 has a plurality of integrated nail members 57 protruding from the frame contact surface 501. The integrated nail members 57 are adapted to penetrate the frame of the wall.

The attaching means are adapted for attaching the installation member 5 to the box case 2. The attaching means is integrated into the box case 2 and installation member 5 such that the box case 2 has attaching means of the box case integrated thereto, and the installation member 5 has attaching means of the installation member integrated thereto. Attaching means of the box case is made of same material as rest of the box case 2, and the attaching means of the installation member is made of same material as rest of the installation member 5. The attaching means of the box case are adapted to co-operate with the attaching means of the installation member for attaching the installation member 5 to the box case 2.

The installation member 5 comprises a box case contact portion 52 which in a use situation extends substantially perpendicular to the box opening plane. The box case contact portion 52 comprises the attaching means of the installation member. The box case contact portion 52 extends substantially perpendicular to the frame contact portion 51.

The attaching means is adapted to attach the installation member 5 to a first predetermined position in the depth direction relative to the box case 2 by preventing movement of the box case 2 in a first direction relative to the installation member 5, the first direction being parallel to the depth direction. In Figure 1 the installation member 5 is depicted in the first predetermined position relative to the box case 2. The attaching means is also adapted to attach the installation member 5 to a second predetermined position in the depth direction. The first predetermined position and the second predetermined position are spaced apart in the depth direction.

The additional flange element 14 is a separate element which rests on a flange surface 206 of the box case 2. The flange surface 206 is substantially parallel to the box opening plane and extends radially outside the edge 202 of the box opening 22. A contact surface 142 of the additional flange element 14 extends substantially in the wallboard contact plane defined by the wallboard contact surface 502 of the frame contact portion 51. The contact surface 142 is adapted to be in contact with a wallboard of the wall in order to prevent movement of the box case 2 in a second direction relative to installation member 5, the second direction being opposite to the first direction.

The box case 2 comprises two installation apertures 21 on each of its four sides. Each installation aperture 21 is adapted to provide a passage for at least one electric wire between exterior of the box case 2 and the mounting space. When the installation member 5 is attached to the mounting box the installation member 5 prevents use of the two installation apertures located on the side of the box case on which the installation member 5 is attached. Therefore there are six installation apertures available in Figure 1.

In Figure 1 each installation aperture 21 is blocked by a removable shield plug 48. Each removable shield plug 48 is an integral part of the box case 2. The removable shield plug 48 is adapted to be cut off in order to provide said passage for at least one electric wire. During an installation work an electrician removes required number of removable shield plugs 48 while the rest removable shield plugs protect the mounting space against dirt and foreign bodies.

Figure 2 shows a cross-sectional view of the attaching means of the mounting box assembly of Figure 1. The attaching means comprises a first recess 81 and a second recess 82 provided on the box case 2, and a locking projection 7 provided on the installation member 5. The first recess 81 and the second recess 82 are provided on the base portion of the box case 2.

The first recess 81 and the second recess 82 are spaced apart in the depth direction, which in Figure 2 is parallel to vertical direction. The locking projection 7 has a locking position and a deflected position such that in the locking position a free distal end 72 of the locking projection 7 is adapted to be received in the first recess 81 and the second recess 82 for attaching the installation member 5 to the first and second predetermined positions respectively, and in the deflected position the locking projection 7 is adapted to allow movement of the box case 2 in the first direction relative to the installation member 5.

In Figure 2 the locking projection 7 is in its locking position, and the free distal end 72 of the locking projection 7 is in the first recess 81 thereby attaching the installation member 5 to a first predetermined position. Cooperation between the locking projection 7 and the first recess 81 prevents movement of the box case 2 in the first direction relative to the installation member 5, the first direction being downwards in Figure 2.

The locking projection 7 is an oblique projection which generally extends in a direction forming an acute angle with the depth direction. The locking projection 7 has a tip portion 725 which comprises the free distal end 72, the tip portion 725 forming a greater angle with the depth direction than a base 715 of the locking projection 7 extending between a fixed proximal end 71 of the locking projection 7 and the tip portion 725. In Figure 2 an angle between the base 715 of the locking projection 7 and the depth direction is approximately 20°, and an angle between the tip portion 725 of the locking projection 7 and the depth direction is approximately 65°.

In alternative embodiments an angle between the base of the locking projection and the depth direction may be in the range of 10° to 65°, and an angle between the tip portion of the locking projection and the depth direction may be in the range of 40° to 85°. Abovementioned angles relate to the locking position of the locking projection. In some embodiments an angle between the base of the locking projection and the depth direction is substantially equal to an angle between the tip portion of the locking projection and the depth direction.

The attaching means comprises return means adapted to return the locking projection 7 to the locking position if the locking projection 7 is deflected from the locking position towards the deflected position. The return means is provided by a flexible structure of the locking projection 7. In an alternative embodiment the return means may comprise a separate spring member.

In an alternative embodiment attaching means comprises a first recess and a second recess provided on the installation member, and a locking projection provided on the box case. In a further alternative embodiment attaching means is adapted to attach the installation member to three or more predetermined positions in the depth direction relative to the box case.

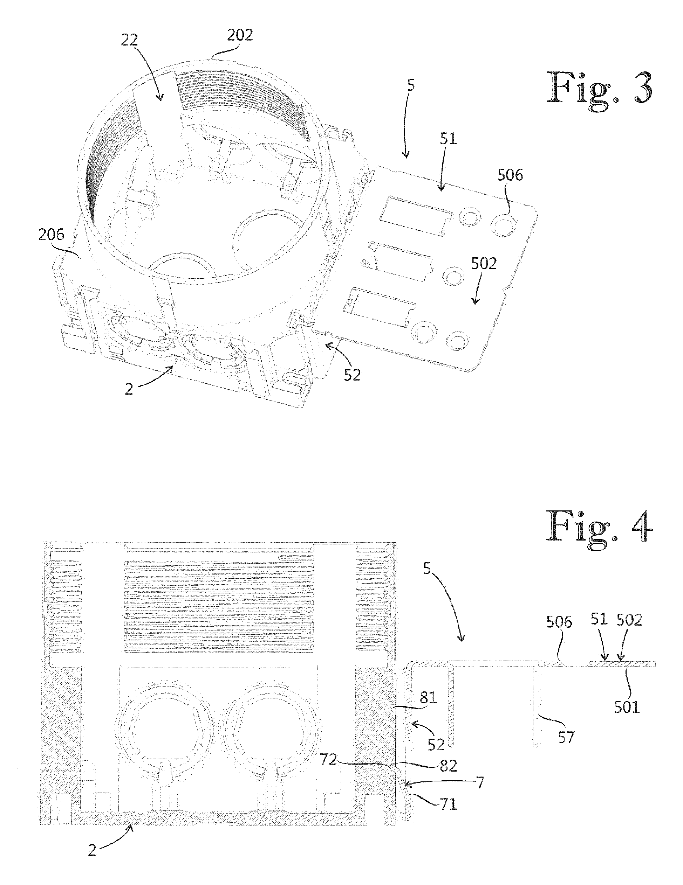

In Figure 3 the installation member 5 is depicted in the second predetermined position relative to the box case 2. In the second predetermined position a distance between the wallboard contact plane and the box opening plane is substantially double compared to a distance between the wallboard contact plane and the box opening plane in the first predetermined position.

Figure 3 shows that there is no need for the additional flange element when the installation member 5 is in the second predetermined position relative to the box case 2. The flange surface 206 of the box case 2 is adapted to be in contact with a wallboard of the wall in order to prevent movement of the box case 2 in the second direction relative to installation member 5. When the installation member 5 is in the second predetermined position relative to the box case 2 the flange surface 206 extends substantially in the wallboard contact plane defined by the wallboard contact surface 502 of the frame contact portion 51.

Figure 4 shows a cross-sectional view of the mounting box assembly of Figure 3. In Figure 4 the locking projection 7 is in its locking position, and the free distal end 72 of the locking projection 7 is in the second recess 82 thereby attaching the installation member 5 to the second predetermined position. The locking projection 7 prevents movement of the box case 2 in the first direction i.e. downwards relative to the installation member 5.

Due to the oblique position and flexible structure of the locking projection 7, the locking projection 7 allows moving the installation member 5 from the first predetermined position to the second predetermined position. The locking projection 7 simply bends to its deflected position when the installation member 5 is moved from the first predetermined position towards the second predetermined position. By contrast the locking projection 7 does not allow moving the installation member 5 from the second predetermined position towards the first predetermined position.

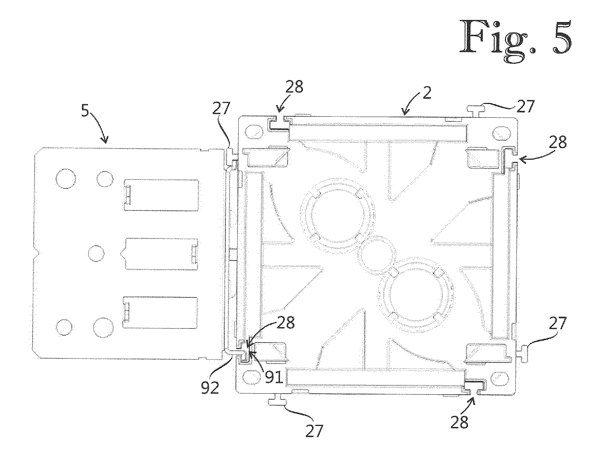

Figure 5 shows the mounting box assembly of Figure 3 from below, from a direction parallel to the depth direction. The substantially square cross section of the base portion of the box case 2 allows placing mounting boxes closely side by side. Each box case 2 comprises connection means for connecting the box case 2 to an adjacent box case. The connection means comprises projections 27 having a T-shaped cross section and slots 28 having a T-shaped cross section. Electric wires may pass from one box case to adjacent one through the installation apertures.

The mounting box assembly comprises guiding means adapted to guide the installation member 5 in the depth direction relative to the box case 2 when the installation member 5 is being attached to the box case 2, and to substantially prevent movement of the box case 2 relative to the installation member 5 in a direction perpendicular to the depth direction. The guiding means are integrated into the box case 2 and installation member 5.

The guiding means comprises a guiding slot 91 provided on the box case 2, and a guiding projection 92 provided on the installation member 5. The guiding projection 92 is adapted to be received in the guiding slot 91. Both the guiding slot 91 and the guiding projection 92 extend substantially parallel to the depth direction in a use situation. Figure 5 shows that a slot 28 of the connection means additionally operates as a guiding slot 91 of the guiding means. Also the T-shaped projection 27 forms part of the guiding means. Therefore the connection means of the box case 2 is adapted to form part of the guiding means of the mounting box assembly. In an alternative embodiment the guiding means comprises a guiding slot provided on the installation member, and a guiding projection provided on the box case.

The guiding means allow relative movement between the box case 2 and the installation member 5 in the depth direction. Referring to Figure 1, it would be possible to push the installation member 5 all the way through the guiding means from up to down without the locking projection 7 or the guiding means preventing the movement.

The box case 2 is made of a plastic material. In an alternative embodiment the box case is made of another electrically non-conductive material. The installation member 5 may be made of metal such as steel or aluminium.

It will be obvious to a person skilled in the art that the inventive concept can be implemented in various ways. The invention and its embodiments are not limited to the examples described above but may vary within the scope of the claims.

## Claims

1. A mounting box assembly comprising:
a mounting box comprising a box case (2) defining a mounting space for accommodating an electrical component, the box case (2) having a box opening (22) providing an access into the mounting space, an edge (202) of the box opening (22) defines a box opening plane, the mounting box has a depth direction which is perpendicular to the box opening plane;
an installation member (5) adapted to be attached to the box case (2) of the mounting box, the installation member (5) comprises a frame contact portion (51) by means of which the installation member (5) is adapted to be fixed to a frame of a wall, the frame contact portion (51) has a frame contact surface (501) adapted to be in contact with the frame of the wall; and
attaching means for attaching the installation member (5) to the box case (2), the attaching means being integrated into the box case (2) and installation member (5) and adapted to attach the installation member (5) to a first predetermined position and to a second predetermined position in the depth direction by preventing movement of the box case (2) in a first direction relative to the installation member (5), the first direction being parallel to the depth direction;
**characterized in that** the box case (2) comprises a flange surface (206) which is substantially parallel to the box opening plane and extends radially outside the edge (202) of the box opening (22), the flange surface (206) is adapted to be in contact with a wallboard of the wall in order to prevent movement of the box case (2) in a second direction relative to installation member (5), the second direction being opposite to the first direction.

2. A mounting box assembly according to claim 1, **characterized in that** the attaching means comprises:
a first recess (81) and a second recess (82) provided on one of the installation member (5) and box case (2), the first recess (81) and the second recess (82) being spaced apart in the depth direction;
a locking projection (7) provided on the other of the installation member (5) and box case (2), the locking projection (7) has a locking position and a deflected position such that in the locking position a free distal end (72) of the locking projection (7) is adapted to be received in the first recess (81) and the second recess (82) for attaching the installation member (5) to the first and second predetermined positions respectively, and in the deflected position the locking projection (7) is adapted to allow movement of the box case (2) in the first direction relative to the installation member (5).

3. A mounting box assembly according to claim 2, **characterized in that** the attaching means further comprises return means adapted to return the locking projection (7) to the locking position if the locking projection (7) is deflected from the locking position towards the deflected position.

4. A mounting box assembly according to claim 3, **characterized in that** the locking projection (7) is an oblique projection which generally extends in a direction forming an acute angle with the depth direction, and the return means is provided by a flexible structure of the locking projection (7).

5. A mounting box assembly according to claim 4, **characterized in that** the locking projection (7) has a tip portion (725) which comprises the free distal end (72), the tip portion (725) forming a greater angle with the depth direction than a base (715) of the locking projection (7) extending between a fixed proximal end (71) of the locking projection (7) and the tip portion (725).

6. A mounting box assembly according to any one of preceding claims, **characterized in that** the frame contact surface (501) defines a frame contact plane which in a use situation extends substantially parallel to the box opening plane.

7. A mounting box assembly according to claim 6, **characterized in that** a distance between the wallboard contact plane and the box opening plane in the second predetermined position is substantially double compared to a distance between the wallboard contact plane and the box opening plane in the first predetermined position.

8. A mounting box assembly according to any one of preceding claims, **characterized in that** the frame contact portion (51) comprises a plurality of fixing member apertures (506), each fixing member aperture (506) being a circular through hole adapted to receive a fixing member such as a screw or a nail for fixing the installation member (5) to a frame of a wall.

9. A mounting box assembly according to any one of preceding claims, **characterized in that** the installation member (5) comprises a box case contact portion (52) which in a use situation extends substantially perpendicular to the box opening plane, the box case contact portion (52) comprises the attaching means of the installation member (5).

10. A mounting box assembly according to any one of preceding claims, **characterized in that** the mounting box assembly further comprises guiding means adapted to guide the installation member (5) in the depth direction relative to the box case (2) when the installation member (5) is being attached to the box case (2), and to substantially prevent movement of the box case (2) relative to installation member (5) in a direction perpendicular to the depth direction, the guiding means being integrated into the box case (2) and installation member (5).

11. A mounting box assembly according to claim 10, **characterized in that** the guiding means comprises a guiding slot (91) provided on one of the installation member (5) and box case (2), and a guiding projection (92) provided on the other of the installation member (5) and box case (2), the guiding projection (92) being adapted to be received in the guiding slot (91), both the guiding slot (91) and the guiding projection (92) extend substantially parallel to the depth direction in a use situation.

12. A mounting box assembly according to any one of preceding claims, **characterized in that** the box case (2) is made of an electrically non-conductive material such as a plastic material, and the installation member (5) is made of metal.

## Patentansprüche

1. Montagekastenanordnung mit:
einem Montagekasten mit einem Kastengehäuse (2), das einen Montageraum zur Unterbringung eines elektrischen Bauteils definiert, wobei das Kastengehäuse (2) eine Kastenöffnung (22) zur Bildung eines Zugangs zu dem Montageraum bildet, wobei ein Rand (202) der Kastenöffnung (22) eine Kastenöffnungsebene definiert, und der Montagekasten eine Tiefenrichtung hat, die rechtwinklig zu der Kastenöffnungsebene verläuft;
einem Installationsteil (5), das zur Anbringung an dem Kastengehäuse (2) des Montagekastens ausgebildet ist, wobei das Installationsteil (5) einen Rahmenkontaktabschnitt (51) aufweist, mittels dessen das Installationsteil (5) an einem Rahmen einer Wand befestigbar ist, wobei der Rahmenkontaktabschnitt (51) eine Rahmenkontaktfläche (501) hat, die zum Kontakt mit dem Rahmen der Wand ausgebildet ist; und
einer Befestigungsvorrichtung zum Befestigen des Installationsteils (5) an dem Kastengehäuse (2), wobei die Befestigungsvorrichtung in das Kastengehäuse (2) und das Installationsteil (5) integriert ist und ausgebildet ist zum Befestigen des Installationsteils (5) an einer ersten vorbestimmten Position und an einer zweiten vorbestimmten Position in der Tiefenrichtung durch Verhindern einer in einer ersten Richtung verlaufenden Bewegung des Kastengehäuses (2) relativ zu dem Installationsteil (5), wobei die erste Richtung parallel zu der Tiefenrichtung verläuft,
**dadurch gekennzeichnet, dass** das Kastengehäuse (2) eine Flanschfläche (206) aufweist, die im Wesentlichen parallel zu der Kastenöffnungsebene verläuft und sich radial außerhalb des Rands (202) der Kastenöffnung (22) erstreckt, wobei die Flanschfläche (206) zum Kontakt mit einer Wandbauplatte der Wand ausgebildet ist, um eine in einer zweiten Richtung verlaufende Bewegung des Kastengehäuses (2) relativ zu dem Installationsteil (5) zu verhindern, wobei die zweite Richtung der ersten Richtung entgegengesetzt ist.

2. Montagekastenanordnung nach Anspruch 1, **dadurch gekennzeichnet, dass** die Befestigungsvorrichtung aufweist:
eine erste Ausnehmung (81) und eine zweite Ausnehmung (82), die an einem aus Installationsteil (5) und Kastengehäuse (2) angeordnet sind, wobei die erste Ausnehmung (81) und die zweite Ausnehmung (82) in der Tiefenrichtung voneinander beabstandet sind;
einen Verriegelungsvorsprung (7), der an dem anderen aus Installationsteil (5) und Kastengehäuse (2) angeordnet ist, wobei der Verriegelungsvorsprung (7) eine Verriegelungsposition und eine Auslenkungsposition hat, derart, dass in der Verriegelungsposition ein freies distales Ende (72) des Verriegelungsvorsprungs (7) zur Aufnahme in der ersten Ausnehmung (81) und der zweiten Ausnehmung (82) in der Lage ist, um das Installationsteil (5) an der ersten bzw. der zweiten vorbestimmten Position zu befestigen, und dass in der Auslenkungsposition der Verriegelungsvorsprung (7) in der Lage ist, eine in der ersten Richtung verlaufende Bewegung des Kastengehäuses (2) relativ zu dem Installationsteil (5) zuzulassen.

3. Montagekastenanordnung nach Anspruch 2, **dadurch gekennzeichnet, dass** die Befestigungsvorrichtung ferner eine Rückbewegungsvorrichtung aufweist, die derart ausgebildet ist, dass sie den Verriegelungsvorsprung (7) in die Verriegelungsposition zurückzubewegt, falls der Verriegelungsvorsprung (7) aus der Verriegelungsposition zu der Auslenkungsposition hin ausgelenkt ist.

4. Montagekastenanordnung nach Anspruch 3, **dadurch gekennzeichnet, dass** der Verriegelungsvorsprung (7) ein schräger Vorsprung ist, der sich im Wesentlichen in einer Richtung erstreckt, die einen spitzen Winkel mit der Tiefenrichtung bildet, und dass die Rückbewegungsvorrichtung durch eine flexible Struktur des Verriegelungsvorsprungs (7) gebildet ist.

5. Montagekastenanordnung nach Anspruch 4, **dadurch gekennzeichnet, dass** der Verriegelungsvorsprung (7) einen Endabschnitt (725) hat, der das freie distale Ende (72) aufweist, wobei der Endabschnitt (725) einen größeren Winkel mit der Tiefenrichtung bildet als eine Basis (715) des Verriegelungsvorsprungs (7), die sich zwischen einem fixierten proximalen Ende (71) des Verriegelungsvorsprungs (7) und dem Endabschnitt (725) erstreckt.

6. Montagekastenanordnung nach einem der vorhergehenden Ansprüche, **dadurch gekennzeichnet, dass** die Rahmenkontaktfläche (501) eine Rahmenkontaktebene bildet, die sich in einer Benutzungssituation im Wesentlichen parallel zu der Kastenöffnungsebene erstreckt.

7. Montagekastenanordnung nach Anspruch 6, **dadurch gekennzeichnet, dass** ein Abstand zwischen der Wandbauplattenkontaktebene und der Kastenöffnungsebene in der zweiten vorbestimmten Position im Vergleich mit einem Abstand zwischen der Wandbauplattenkontaktebene und der Kastenöffnungsebene in der ersten vorbestimmten Position im Wesentlichen doppelt so groß ist.

8. Montagekastenanordnung nach einem der vorhergehenden Ansprüche, **dadurch gekennzeichnet, dass** der Rahmenkontaktabschnitt (51) mehrere Fixierteilöffnungen (506) aufweist, wobei jede Fixierteilöffnung (506) ein kreisförmiges Durchgangsloch ist, das zur Aufnahme eines Fixierteils wie z.B. einer Schraube oder eines Nagels ausgebildet ist, um das Installationsteil (5) an einem Rahmen einer Wand zu fixieren.

9. Montagekastenanordnung nach einem der vorhergehenden Ansprüche, **dadurch gekennzeichnet, dass** das Installationsteil (5) einen Kastengehäusekontaktabschnitt (52) aufweist, der sich in einer Benutzungssituation im Wesentlichen rechtwinklig zu der Kastenöffnungsebene erstreckt, wobei der Kastengehäusekontaktabschnitt (52) die Befestigungsvorrichtung des Installationsteils (5) aufweist.

10. Montagekastenanordnung nach einem der vorhergehenden Ansprüche, **dadurch gekennzeichnet, dass** die Montagekastenanordnung ferner eine Führungsvorrichtung aufweist, die derart ausgebildet ist, dass sie das Installationsteil (5) in der Tiefenrichtung relativ zu dem Kastengehäuse (2) führt, wenn das Installationsteil (5) an dem Kastengehäuse (2) befestigt wird, und eine Bewegung des Kastengehäuses (2) relativ zu dem Installationsteil (5) in einer rechtwinklig zur Tiefenrichtung verlaufenden Richtung im Wesentlichen verhindert, wobei die Führungsvorrichtung in das Kastengehäuse (2) und das Installationsteil (5) integriert ist.

11. Montagekastenanordnung nach Anspruch 10, **dadurch gekennzeichnet, dass** die Führungsvorrichtung einen Führungsschlitz (91), der an einem aus Installationsteil (5) und Kastengehäuse (2) vorgesehen ist, und einen Führungsvorsprung (92) aufweist, der an dem anderen aus Installationsteil (5) und Kastengehäuse (2) vorgesehen ist, wobei der Führungsvorsprung (92) zur Aufnahme in dem Führungsschlitz (91) ausgebildet ist, wobei sich in einer Betriebssituation sowohl der Führungsschlitz (91) als auch der Führungsvorsprung (92) im Wesentlichen parallel zur Tiefenrichtung erstrecken.

12. Montagekastenanordnung nach einem der vorhergehenden Ansprüche, **dadurch gekennzeichnet, dass** das Kastengehäuse (2) aus einem elektrisch nichtleitenden Material wie z.B. einem Plastikmaterial ausgebildet ist und das Installationsteil (5) aus Metall ausgebildet ist.

## Revendications

1. Ensemble de boîte de montage comprenant :
une boîte de montage comprenant un corps de boîte (2) définissant un espace de montage pour loger un composant électrique, le corps de boîte (2) ayant une ouverture de boîte (22) fournissant un accès dans l'espace de montage, un bord (202) de l'ouverture de boîte (22) définit un plan d'ouverture de boîte, la boîte de montage à une direction de profondeur qui est perpendiculaire au plan d'ouverture de boîte ;
un élément d'installation (5) adapté pour être fixé sur le corps de boîte (2) de la boîte de montage, l'élément d'installation (5) comprend une partie de contact de bâti (51) au moyen de laquelle l'élément d'installation (5) est adapté pour être fixé sur un bâti d'une paroi, la partie de contact de bâti (51) a une surface de contact de bâti (501) adaptée pour être en contact avec le bâti de la paroi ; et
des moyens de fixation pour fixer l'élément d'installation (5) sur le corps de boîte (2), les moyens de fixation étant intégrés dans le corps de boîte (2) et l'élément d'installation (5) et adaptés pour fixer l'élément d'installation (5) dans une première position prédéterminée et dans une seconde position prédéterminée dans la direction de profondeur en empêchant le déplacement du corps de boîte (2) dans une première direction par rapport à l'élément d'installation (5), la première direction étant parallèle à la direction de profondeur ;
**caractérisé en ce que** le corps de boîte (2) comprend une surface de bride (206) qui est sensiblement parallèle au plan d'ouverture de boîte et s'étend radialement à l'extérieur du bord (202) de l'ouverture de boîte (22), la surface de bride (206) est adaptée pour être en contact avec un panneau de revêtement de la paroi afin d'empêcher le déplacement du corps de boîte (2) dans une seconde direction par rapport à l'élément d'installation (5), la seconde direction étant opposée à la première direction.

2. Ensemble de boîte de montage selon la revendication 1, **caractérisé en ce que** les moyens de fixation comprennent :
un premier évidement (81) et un second évidement (82) prévus sur l'un parmi l'élément d'installation (5) et le corps de boîte (2), le premier évidement (81) et le second évidement (82) étant espacés dans la direction de profondeur ;
une saillie de blocage (7) prévue sur l'autre parmi l'élément d'installation (5) et le corps de boîte (2), la saillie de blocage (7) a une position de blocage et une position déviée, de sorte que dans la position de blocage, une extrémité distale libre (72) de la saillie de blocage (7) est adaptée pour être reçue dans le premier évidement (81) et le second évidement (82) pour fixer l'élément d'installation (5) dans les première et seconde positions prédéterminée respectivement, et dans la position déviée, la saillie de blocage (7) est adaptée pour permettre le déplacement du corps de boîte (2) dans la première direction par rapport à l'élément d'installation (5).

3. Ensemble de boîte de montage selon la revendication 2, **caractérisé en ce que** les moyens de fixation comprennent en outre des moyens de retour adaptés pour ramener la saillie de blocage (7) dans la position de blocage si la saillie de blocage (7) est déviée de la position de blocage vers la position déviée.

4. Ensemble de boîte de montage selon la revendication 3, **caractérisé en ce que** la saillie de blocage (7) est une saillie oblique qui s'étend globalement dans une direction formant un angle aigu avec la direction de profondeur, et les moyens de retour sont fournis par une structure flexible de la saillie de blocage (7).

5. Ensemble de boîte de montage selon la revendication 4, **caractérisé en ce que** la saillie de blocage (7) a une partie de pointe (725) qui comprend l'extrémité distale libre (72), la partie de pointe (725) formant un angle plus important avec la direction de profondeur qu'une base (715) de la saillie de blocage (7) s'étendant entre une extrémité proximale fixe (71) de la saillie de blocage (7) et la partie de pointe (725).

6. Ensemble de boîte de montage selon l'une quelconque des revendications précédentes, **caractérisé en ce que** la surface de contact de bâti (501) définit un plan de contact de bâti qui, dans une situation d'utilisation, s'étend sensiblement parallèlement au plan d'ouverture de boîte.

7. Ensemble de boîte de montage selon la revendication 6, **caractérisé en ce qu'**une distance entre le plan de contact de revêtement de paroi et le plan d'ouverture de boîte dans la seconde position prédéterminée, est sensiblement le double par rapport à une distance entre le plan de contact de revêtement de paroi et le plan d'ouverture de boîte dans la première position prédéterminée.

8. Ensemble de boîte de montage selon l'une quelconque des revendications précédentes, **caractérisé en ce que** la partie de contact de bâti (51) comprend une pluralité d'ouvertures d'élément de fixation (506), chaque ouverture d'élément de fixation (506) étant un trou traversant circulaire adapté pour recevoir un élément de fixation tel qu'une vis ou un clou pour fixer l'élément d'installation (5) sur un bâti d'une paroi.

9. Ensemble de boîte de montage selon l'une quelconque des revendications précédentes, **caractérisé en ce que** l'élément d'installation (5) comprend une partie de contact de corps de boîte (52) qui, dans une situation d'utilisation, s'étend sensiblement perpendiculairement au plan d'ouverture de boîte, la partie de contact de corps de boîte (52) comprend les moyens de fixation de l'élément d'installation (5).

10. Ensemble de boîte de montage selon l'une quelconque des revendications précédentes, **caractérisé en ce que** l'ensemble de boîte de montage comprend en outre des moyens de guidage adaptés pour guider l'élément d'installation (5) dans la direction de profondeur par rapport au corps de boîte (2) lorsque l'élément d'installation (5) est fixé sur le corps de boîte (2), et pour empêcher sensiblement le déplacement du corps de boîte (2) par rapport à l'élément d'installation (5) dans une direction perpendiculaire à la direction de profondeur, les moyens de guidage étant intégrés dans le corps de boîte (2) et l'élément d'installation (5).

11. Ensemble de boîte de montage selon la revendication 10, **caractérisé en ce que** les moyens de guidage comprennent une fente de guidage (91) prévue sur l'un parmi l'élément d'installation (5) et le corps de boîte (2), et une saillie de guidage (92) prévue sur l'autre parmi l'élément d'installation (5) et le corps de boîte (2), la saillie de guidage (92) étant adaptée pour être reçue dans la fente de guidage (91), à la fois la fente de guidage (91) et la saillie de guidage (92) s'étendent sensiblement parallèlement à la direction de profondeur, dans une situation d'utilisation.

12. Ensemble de boîte de montage selon l'une quelconque des revendications précédentes, **caractérisé en ce que** le corps de boîte (2) est réalisé avec un matériau électriquement non conducteur tel qu'une matière plastique et l'élément d'installation (5) est réalisé à partir de métal.
